(19) Europäisches Patentamt
European Patent Office
Office européen des brevets

(11) **EP 3 752 469 B1**

(12) **EUROPÄISCHE PATENTSCHRIFT**

(45) Veröffentlichungstag und Bekanntmachung des Hinweises auf die Patenterteilung:
**01.04.2026   Patentblatt 2026/14**

(21) Anmeldenummer: **19704274.0**

(22) Anmeldetag: **05.02.2019**

(51) Internationale Patentklassifikation (IPC):
**C03B 23/045** (2006.01)

(52) Gemeinsame Patentklassifikation (CPC):
**C03B 23/045**

(86) Internationale Anmeldenummer:
**PCT/EP2019/052717**

(87) Internationale Veröffentlichungsnummer:
**WO 2019/158392 (22.08.2019 Gazette 2019/34)**

(54) **HALTEFUTTER FÜR MASCHINEN ZUR HERSTELLUNG VON GLASBEHÄLTNISSEN**

SECURING CLAMP FOR MACHINES FOR PRODUCING GLASS CONTAINERS

MANDRIN DE SERRAGE POUR MACHINES SERVANT À FABRIQUER DES RÉCIPIENTS EN VERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **15.02.2018   DE 102018103441**

(43) Veröffentlichungstag der Anmeldung:
**23.12.2020   Patentblatt 2020/52**

(73) Patentinhaber: **SCHOTT Pharma Schweiz AG 9000 St. Gallen (CH)**

(72) Erfinder:
• **TREMP, Marcel 9042 Speicher (CH)**
• **OTERO, Marco 9000 St. Gallen (CH)**

(74) Vertreter: **Ullrich & Naumann PartG mbB Schneidmühlstrasse 21 69115 Heidelberg (DE)**

(56) Entgegenhaltungen:
**EP-A2- 0 469 297    EP-B1- 0 469 297 FR-A- 680 782**

**Beschreibung**

**Gebiet der Erfindung**

Die vorliegende Erfindung betrifft allgemein die Herstellung von Glasbehältnissen, insbesondere zur Verwendung als Primär-Packmittel für pharmazeutische Wirkstoffe, beispielsweise als Glasfläschchen (Vials), Karpulen oder Spritzenkörper, und betrifft insbesondere ein Haltefutter für mit Glasrohren beschickbare Maschinen zur Herstellung solcher Glasbehältnisse.

**Hintergrund der Erfindung**

Haltefutter für Rohre oder zylindersymmetrische Werkstücke sind im Stand der Technik bestens bekannt. An Haltefutter für Glasrohre sind jedoch besondere Anforderungen gestellt, da Glasrohre nur geringe radiale Spannkräfte aushalten und bei Anwendung von zu hohen Kräften brechen. Haltefutter in üblichen Heißformgebungsmaschinen für die Herstellung von Vials aus Rohren erfordern ferner, dass das Futter sehr schnell geöffnet und geschlossen werden muss und dass das Haltefutter das Glasrohr nach dem Einspannen ohne Anwendung einer von außen auf das Haltefutter wirkenden Kraft zuverlässig spannt.

Ein Haltefutter ist aus der EP 0 469 297 A2 der Anmelderin bekannt und weist einen zentralen Beschickungskanal für die Glasrohre, mehrere verstellbare Klemmbacken am unteren Ende des Beschickungskanals und verteilt um dessen Öffnung herum angeordnet, deren Abstand zur Mittellinie des Beschickungskanals verstellbar ist, ein Betätigungselement zum gemeinsamen Verstellen der Klemmbacken, ein Getriebe, das die verstellbaren Klemmbacken mit dem Betätigungselement koppelt, und Führungen auf, um eine Verstellbewegung der Klemmbacken senkrecht, radial einwärts zur Mittellinie des Beschickungskanals zu führen. Aufgrund dieses Aufbaus sind die Klemmbacken beim Greifen der Glasrohre frei von einer Längsbewegung und können somit das Glasrohr frei von einer Verschiebung in Längsrichtung greifen. Damit wird ein sicheres und zentriertes Greifen eines Glasrohrs möglich.

Hierzu ist eine Zwangsführung vorgesehen, die durch eine Kulissenführung in einer Druckhülse und einen in der Kulissenführung geführten Mitnehmer ausgebildet ist, der an jeder der Klemmbacken angeordnet ist. Die Zwangsführung verläuft unter einem konstanten Winkel bezüglich der Längsachse des Beschickungskanals. Dabei ist die wirkende Klemmkraft beim Greifen von Glasrohren mit unterschiedlichen Außendurchmessern allerdings stets konstant.

Ein weiteres Haltefutter ist in der DE 10 2008 058 211 A1 offenbart. Bei diesem Haltefutter sind die Klemmbacken entlang von Führungen geführt, die sich geneigt zur Mittellinie und hin zur Öffnung am unteren Ende des Beschickungskanals erstrecken. Dadurch ist das Greifen von Glasrohren nicht frei von einer Verschiebung in Längsrichtung, was sich nachteilig auf die erzielbare Positionierungsgenauigkeit der Glasrohre auswirken kann.

Ein weiteres Haltefutter, das zur Weiterverarbeitung von Glasrohren bei hohen Temperaturen verwendet wird, ist beispielsweise aus der CN 103073177 A bekannt. Dabei ist jedoch kein zentraler Beschickungskanal vorgesehen. Vielmehr sind zwei Klemmbacken mit V-Nuten vorgesehen, die durch ein exzentrisches Betätigungselement verstellt werden. Diese Anordnung eignet sich nicht zur Herstellung von Glasfläschchen (Vials), Karpulen oder Spritzenkörpern in Maschinen mit hohen Taktraten, die ein rasches Öffnen und Schließen der Klemmbacken erfordern.

JP 2001019451 A1 offenbart eine Vorrichtung zum Einspannen von Glasstäben zum Einsatz in einem Wiederziehprozess zum Wiederziehen eines Glasstabs, womit der Glasstab durch das Einspannen keine Biegung erfahren soll. Dabei wird der Glasstab nacheinander oberhalb und unterhalb eines Ofens zum erneuten Erwärmen des Glasstabs eingespannt. Um eine Positionsänderung beim zweiten Einspannen zu verhindern, werden die Klemmbacken in einer ersten Phase zunächst auf Anschlag gefahren, ohne eine große Kraft auszuüben, und anschließend werden in einer zweiten Phase Kniehebel-Elemente unter großer Krafteinwirkung nachgefahren. Die Kniehebel-Elemente werden jedoch nicht zur Übersetzung einer Bewegung im Sinne eines Koppelelements eingesetzt.

FR 689 782 A offenbart eine Haltevorrichtung für becherförmige Objekte. Die Haltevorrichtung umfasst zwei Backen, die einen Teil des becherförmigen Objekts einklemmen können, wobei das becherförmige Objekt an einen Stab der Haltevorrichtung anschlägt. Die Haltevorrichtung ist nicht für Glasrohre geeignet, da die Haltevorrichtung selbst im Weg stände für lange zylindrische Objekte.

Im Hinblick auf die weiter steigenden Anforderungen an die Produktqualität von Glasbehältnissen zur Verwendung als Primär-Packmittel für pharmazeutische Wirkstoffe besteht somit weiterer Verbesserungsbedarf.

**Zusammenfassung der Erfindung**

Es ist eine allgemeine Aufgabe der vorliegenden Erfindung, ein verbessertes Haltefutter für mit Glasrohren beschickbare Maschinen zur Herstellung von Glasbehältnissen bereitzustellen, womit sich Glasrohre über einen großen Bereich von Durchmessern in einfacher Weise zuverlässig halten lassen.

Diese Aufgabe wird durch ein Haltefutter nach Anspruch 1 gelöst. Weitere vorteilhafte Ausführungsformen sind Gegenstand der rückbezogenen Unteransprüche.

Gemäß der vorliegenden Erfindung wird ein Haltefutter für mit Glasrohren beschickbare Maschinen zur Herstellung von Glasbehältnissen bereitgestellt, insbesondere zur Herstellung von Glasfläschchen (Vials), Karpulen oder Spritzenkörpern, mit einem zentralen Beschickungskanal für die Glasrohre, mehreren verstellbaren Klemmbacken am unteren Ende des Beschickungskanals, die verteilt um dessen Öffnung herum angeordnet sind und deren Abstand zur Mittellinie des Beschickungskanals verstellbar ist, einem Betätigungselement zum Verstellen der Klemmbacken, einem Koppelelement bzw. Getriebe, das die verstellbaren Klemmbacken mit dem Betätigungselement koppelt, und Führungen, um eine Verstellbewegung der Klemmbacken senkrecht zur Mittellinie des Beschickungskanals und exakt radial einwärts zu führen.

Erfindungsgemäß weist das Koppelement bzw. Getriebe Hebel auf bzw. ist das Koppelement bzw. Getriebe von Hebeln ausgebildet, die jeweils gelenkig mit dem Betätigungselement und einer zugeordneten Klemmbacke verbunden sind, wobei das Betätigungselement mittels einer Feder elastisch gegen einen Grundkörper des Haltefutters vorgespannt ist, wobei das Koppelelement so ausgelegt ist, dass ein Verhältnis zwischen einer radial wirkenden Klemmkraft der Klemmbacken und einer elastischen Rückstellkraft der Feder mit abnehmender Öffnungsweite der Klemmbacken kontinuierlich verkleinert wird. Mit den Hebeln und deren Schenkellängen stehen Parameter zur Verfügung, mit denen eine Kennlinie der Klemmkraft des Haltefutters für einen großen Durchmesserbereich der Glasrohre geeignet eingestellt werden kann. Gleichzeitig kann das Haltefutter ohne Austausch der Klemmbacken für einen weiten Bereich unterschiedlicher Durchmesser der Glasrohre verwendet werden. Ein Backensatz kann insbesondere einen Durchmesserbereich der Glasrohre abdecken, der zur Herstellung von sämtlichen handelsüblichen Primär-Packmittel für pharmazeutische Wirkstoffe geeignet ist, insbesondere für einen Bereich von Außendurchmessern zwischen 6 mm und 32 mm.

Durch die Anpassung der Haltekräfte über einen großen Rohrdurchmesserbereich können ein Glasrohrbruch oder eine Glasrohrbeschädigung und Durchrutschen des Glasrohrs zuverlässig vermieden werden. Weil die Klemmbacken exakt radial einwärts ohne axialen Versatz verstellt werden, tritt beim Öffnen und Schließen des Haltefutters kein Axialversatz des Glasrohres auf. Dadurch kann das Haltefutter erfindungsgemäß auch sehr schnell geöffnet und geschlossen werden.

Erfindungsgemäß ist das Betätigungselement mittels einer Feder elastisch gegen einen Grundkörper des Haltefutters vorgespannt, wobei das Koppelelement bzw. Getriebe ein Verhältnis zwischen einer radial wirkenden Klemmkraft der Klemmbacken und einer elastischen Rückstellkraft der Feder mit abnehmender Öffnungsweite der Klemmbacken kontinuierlich verkleinert. Damit ist eine besonders vorteilhafte Kennlinie des Haltefutters möglich, denn Glasrohre mit kleinen Außendurchmessern zeichnen sich üblicherweise durch eine geringere mechanische Stabilität und Bruchfestigkeit aus, was relativ geringe Klemmkräfte erfordert, während sich Glasrohre mit größeren Außendurchmessern auch durch eine größere mechanische Stabilität und Bruchfestigkeit auszeichnen, was größere Klemmkräfte zulässt, die für deren größeres Gewicht auch erforderlich sind. Ein Haltefutter gemäß der vorliegenden Erfindung kann durch geeignete Auslegung eines von den Hebeln ausgebildeten Kniehebels in einfacher Weise an diese Verhältnisse angepasst werden. Hierzu stehen als Parameter insbesondere die Schenkellängen der Hebel, der von den Schenkeln eingeschlossene Winkel und die Lage der Drehachsen der Hebel zur Verfügung.

Dabei wirkt das Koppelelement als Getriebe zum Ändern einer bevorzugt parallel zur Längsachse des Beschickungskanals gerichteten Verstellkraft des Betätigungselements in eine geeignet übersetzte und exakt radial einwärts gerichtete Verstellkraft von sämtlichen Klemmbacken, die hierzu synchron radial einwärts verstellt werden können. Die Übersetzung dabei bevorzugt so eingestellt, dass vorherrschende Klemmkräfte für relativ kleine Glasrohrdurchmesser vergleichsweise klein sind und kontinuierlich zu höheren Glasrohrdurchmessern ansteigen, wobei in der Kennlinie der Verstellkraft bevorzugt keine Unstetigkeiten oder Umkehrpunkte vorhanden sind.

Gemäß einer weiteren Ausführungsform ist die Feder konzentrisch um den Grundkörper des Haltefutters herum angeordnet und gegen flanschartige Abschnitte des Betätigungselements und des Grundkörpers des Haltefutters abgestützt. Dies ermöglicht eine besonders platzsparende Ausbildung des Haltefutters mit relativ wenigen Funktionsbauteilen. Zur Verstellung der Federkraft kann dabei der Abstand zwischen den beiden flanschartigen Abschnitten verstellt werden, beispielsweise durch Verdrehen einer Mutter oder Verstellen des flanschartigen Abschnittes am Grundkörper des Haltefutters.

Gemäß einer weiteren Ausführungsform sind die Hebel als abgewinkelte Hebel mit einem ersten Schenkel und einem zweiten Schenkel ausgebildet, wobei der erste Schenkel jeweils gelenkig mit dem Betätigungselement und der zweite Schenkel jeweils gelenkig mit einer zugeordneten Klemmbacke verbunden sind. Das so ermöglichte Kniehebelprinzip ermöglicht in besonders einfacher Weise in einem relativ großen Bereich eine Anpassung der Klemmkräfte und Verstellwege an den Außendurchmesser der Glasrohre.

Gemäß einer weiteren Ausführungsform erstrecken sich die ersten Schenkel im Wesentlichen senkrecht zur Mittellinie, wenn die Klemmbacken nahezu bis zur Mittellinie radial einwärts verstellt sind, wobei sich die ersten Schenkel unter einem spitzen Winkel geneigt zum unteren Ende des Beschickungskanals erstrecken, wenn die Klemmbacken maximal geöffnet sind. Zum Ende der Verstellbewegung der Klemmbacken, also wenn die Klemmbacken relativ nahe zur Mittellinie des Betätigungskanals hin verstellt sind, werden die Klemmbacken somit beim Verstellen des abgewinkelten Hebels um einen vergleichsweise kleinen Verstellweg verstellt. Dies entspricht einem Bereich mit vergleichsweise kleinen Glasrohrdurchmessern. Für relativ große Glasrohrdurchmesser werden die Klemmbacken dagegen bei Verstellen des abgewinkelten Hebels um einen vergleichsweise großen Verstellweg verstellt, was entsprechend größeren Klemmkräften entspricht, die jedoch aufgrund der höheren mechanischen Stabilität und Bruchfestigkeit von Glasrohren mit größeren Außendurchmessern möglich sind.

Ein vorteilhaft einfacher Aufbau ist gemäß einer weiteren Ausführungsform möglich, wenn am vorderen Ende der ersten Schenkel ein Bolzen vorgesehen ist, der jeweils in einer Nut am Betätigungselement gleitbeweglich geführt ist, und wenn am vorderen Ende der zweiten Schenkel jeweils ein Bolzen vorgesehen ist, der in einer Nut der zugeordneten Klemmbacke gleitbeweglich geführt ist.

Gemäß einer weiteren Ausführungsform erstrecken sich die Nuten am Betätigungselement senkrecht zur Mittellinie des Betätigungselements. Für größere Öffnungsweiten der Klemmbacken wird es dabei bevorzugt, wenn der erste Schenkel des abgewinkelten Hebels sich unter einem spitzen Winkel geneigt zur Mittellinie des Beschickungskanals und in Richtung der Öffnung am unteren Ende des Beschickungskanals erstreckt, weil im Falle einer Verstellung des Betätigungselements dann relativ große Verstellwege ermöglicht sind. Für kleinere Öffnungsweiten der Klemmbacken wird es hingegen bevorzugt wenn sich der erste Schenkel des abgewinkelten Hebels im Wesentlichen horizontal, senkrecht zur Mittellinie des Beschickungskanals erstreckt, weil im Falle einer Verstellung des Betätigungselements dann nur relativ kleine Verstellwege ermöglicht sind.

Gemäß einer weiteren Ausführungsform erstreckt sich die Nut der zugeordneten Klemmbacke parallel zur Mittellinie des Betätigungselements. Die Gleitbewegung des Gleitbolzens in dieser Nut verursacht deshalb nur geringe Kippkräfte beim Verstellen der jeweiligen Klemmbacke.

Gemäß einer weiteren Ausführungsform sind die Nuten am Betätigungselement in Führungsarmen ausgebildet, die radial auswärts von dem Betätigungselement abragen, wodurch die Lage des Gleitbolzens am vorderen Ende des ersten Schenkels des abgewinkelten Hebels in vorteilhaft einfacher Weise radial nach außen verlegt werden kann.

Gemäß einer weiteren Ausführungsform sind die Drehachsen der Hebel an einem Führungsblock gelagert, der feststehend am unteren Ende des Betätigungselements vorgesehen ist, insbesondere am unteren Ende einer drehbeweglich gelagerten Welle, die den Beschickungskanal einschließt oder unmittelbar ausbildet. Der Abstand der Drehachsen der Hebel zur Mittellinie des Beschickungskanals ändert sich somit beim Verstellen des Haltefutters nicht, was eine noch präzisere Klemmung der Glasrohre ermöglicht.

Gemäß einer weiteren Ausführungsform ist ein Abschnitt des Betätigungselements, in dem die Nuten ausgebildet sind, in denen die Bolzen an den vorderen Enden der ersten Schenkel der Hebel gleitbeweglich geführt sind, als rotationssymmetrischer Körper ausgebildet, in dem durch spanende Bearbeitung durch Drehen des Betätigungselements die vorgenannten Nuten ausgebildet sind. So können Toleranzen in diesem für die Verstellung der Hebel kritischen Bereich noch präziser eingehalten werden, sodass die Hebel insgesamt noch präziser verstellt werden können. Denn es hat sich gezeigt, dass die Toleranzen bei einer spanabhebenden Herstellung solcher Nuten durch Drehen des Betätigungselements automatisch mit hoher Genauigkeit gewährleistet werden können, dass sämtliche Hebel präzise verstellt werden können.

Gemäß einer weiteren Ausführungsform sind die Führungen als zylindrische oder vieleckige Führungshülsen am unteren Ende des Führungsblocks ausgebildet, wobei die Klemmbacken zylindrisch oder vieleckig und korrespondierend zu den zylindrischen oder vieleckigen Führungshülsen ausgebildet sind und in den zylindrischen oder vieleckigen Führungshülsen gleitbeweglich geführt sind. Besonders bevorzugt werden hierbei zylindrische Querschnittsformen, die durch einfache spanabhebende Bearbeitung durch Drehen eines Werkstücks kostengünstig und präzise hergestellt werden können.

Gemäß einer weiteren Ausführungsform, die ausdrücklich auch als unabhängiger Erfindungsaspekt anzusehen ist und unabhängig beansprucht werden kann, ist jedem Haltefutter unmittelbar ein Antriebsmotor zugeordnet, der unmittelbar an einer den Beschickungskanal einschließenden Welle angeordnet ist, um die Welle mit dem daran vorgesehenen Haltefutter zu drehen. Somit können die Haltefutter einer Heißformungsmaschine noch rascher beschleunigt werden, was erfindungsgemäß sehr hohe Taktraten der Heißformungsmaschine ermöglicht.

**Figurenübersicht**

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:

| | |
|---|---|
| Fig. 1 | eine schematische Darstellung eines Haltefutters gemäß der vorliegenden Erfindung, mit Darstellung von bevorzugten Hebelverhältnissen; |
| Fig. 2a und 2b | in einer Schnittdarstellung im Bereich der Klemmbacken sowie in einer schematischen Darstellung das Haltefutter gemäß der Fig. 1 bei Klemmung eines Glasrohrs mit einem vergleichsweise kleinen Außendurchmesser; |

| Fig. 2c und 2d | in einer Schnittdarstellung im Bereich der Klemmbacken sowie in einer schematischen Darstellung das Haltefutter gemäß der Fig. 1 in einer Stellung mit vergleichsweise großer Öffnungsweite der Klemmbacken; |
| --- | --- |
| Fig. 3 | in einem schematischen Längsschnitt ein Haltefutter gemäß der vorliegenden Erfindung; |
| Fig. 4a und 4b | in schematischen Längsschnitten den unteren Teil des Haltefutters gemäß der Fig. 3 in einer Stellung mit vergleichsweise großer Öffnungsweite der Klemmbacken und in einer Stellung mit vergleichsweise kleiner Öffnungsweite der Klemmbacken; und |
| Fig. 5 | typische Kennlinien eines Haltefutters gemäß der vorliegenden Erfindung für verschiedene Federvorspannungen. |

In den Figuren bezeichnen identische Bezugszeichen identische oder im Wesentlichen gleichwirkende Elemente oder Elementgruppen.

**Ausführliche Beschreibung von bevorzugten Ausführungsbeispielen**

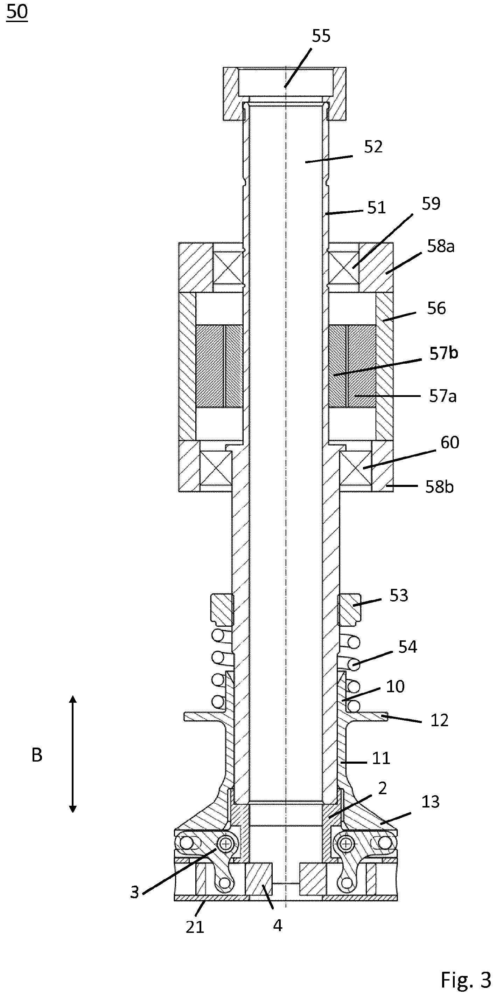

Zunächst wird der allgemeine Aufbau eines erfindungsgemäßen Haltefutters anhand der Fig. 3 beschrieben.

In einer Glasbearbeitungsmaschine (nicht gezeigt), beispielsweise in einer Aufnahme eines Drehtellers, ist das Haltefutter 50 angeordnet. Das Haltefutter 50 umfasst einen insgesamt rotationssymmetrisch ausgebildeten Grundkörper 51, in dem ein sich in einer Längsrichtung erstreckender Beschickungskanal 52 für das zu haltende Glasrohr 9 ausgebildet ist, der sich bis zu einem Führungsblock 2 erstreckt, in dem Klemmbacken 4 zum reibschlüssigen Halten des Glasrohrs (nicht gezeigt) geführt aufgenommen sind. Am oberen Ende des Grundkörpers 51 ist ein Antriebsmotor vorgesehen, um das Haltefutter zur Heissumformung eines gehaltenen Glasrohrs in eine schnelle Rotationsbewegung um die Längsachse des Beschickungskanals 52 zu versetzen. Genauer gesagt ist der Antriebsmotor 57 in einem Motorgehäuse 56 aufgenommen, das unmittelbar an der Außenseite des Grundkörpers 51, insbesondere einer Welle, angeordnet ist. In einer praktischen Anwendung ist das Motorgehäuse 56 über einen Befestigungsflansch 58 oder dergleichen unmittelbar an einem Drehkranz einer Heißformungsvorrichtung (nicht gezeigt) befestigt. Zwischen Antriebsmotor 57 und Grundkörper 51 bzw. Welle sind Lager 59, 60 vorgesehen, sodass der Grundkörper 51 bzw. die Welle von dem Antriebsmotor 57 unmittelbar in eine Drehbewegung versetzt wird. Aufgrund der geringen beweglichen Massen kann die Drehbewegung rasch beschleunigt und wieder abgebremst werden, was erfindungsgemäß sehr hohe Taktraten einer Heißformungsvorrichtung ermöglicht.

Oberhalb des Führungsblocks 20, der feststehend am unteren Ende des Beschickungskanals 52 bzw. des Grundkörpers 51 vorgesehen ist, ist ein insgesamt rotationssymmetrisch ausgebildetes Betätigungselement 1 angeordnet, das an dem Grundkörper 51 in der Betätigungsrichtung B, parallel zu einer Längsachse bzw. Mittellinie des Beschickungskanals 52, verstellbar ist, wie durch den Doppelpfeil angedeutet.

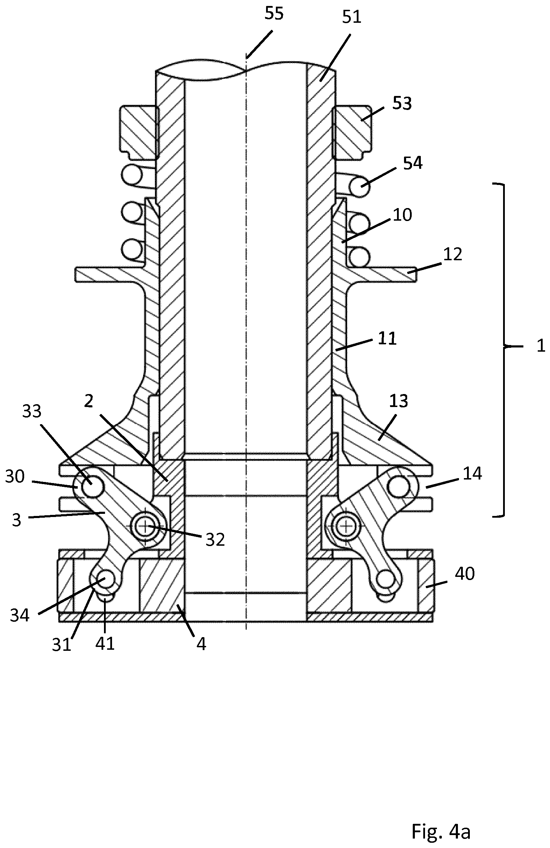

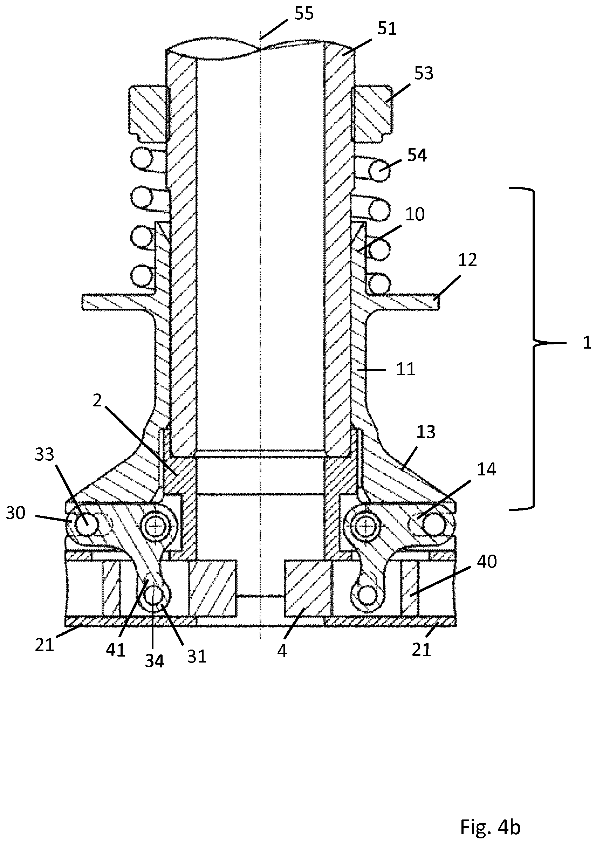

Wie in den Figuren 4a und 4b gezeigt, umfasst das Betätigungselement 1 eine zylindrisch ausgebildete obere und untere Hülse 10, 11, zwischen denen ein radial vorstehender Flansch 12 ausgebildet ist, an dem das untere Ende der in Feder 54 abgestützt ist, deren anderes Ende an einem Federanschlag 53 am Grundkörper 51 abgestützt ist, um das Betätigungselement 1 elastisch gegen den Grundkörper 51 vorzuspannen. Die Federkraft der Feder 54 kann, wenn nötig, produktabhängig eingestellt werden, beispielsweise mit Hilfe einer Mutter und durch axiales Verstellen des Federanschlags 53 am Grundkörper 51. Der Führungsblock 20 ist insgesamt zylindrisch ausgebildet.

Am unteren Ende des Führungsblocks 20 sind mindestens zwei Klemmbacken 4 unter gleichmäßigen Winkelabständen zueinander angeordnet. Bevorzugt sind zumindest drei Klemmbacken 4 vorgesehen, um das Glasrohr an zumindest drei punktförmigen Bereichen gleichmäßig zu klemmen.

Die Klemmbacken 4 sind in korrespondierend ausgebildeten Führungshülsen 21 am unteren Ende des Führungsblocks gleitbeweglich gelagert. Die Führungshülsen 21 sind so ausgerichtet, dass die Klemmbacken 4 exakt radial einwärts und hin zur Mittellinie 55 des Beschickungskanals geführt verstellt werden. Bei der radialen Verstellung der Klemmbacken 4 tritt erfindungsgemäß kein Axialversatz auf. Die Klemmbacken 4 werden durch Betätigen des Betätigungselements 1 synchron verstellt. Für eine gleichmäßige Klemmung des Glasrohrs ist auf eine gleiche Länge sämtlicher Klemmbacken 4 zu achten.

Für eine präzise Führung der Klemmbacken 4 haben diese einen zylindrischen Querschnitt und sind diese in korrespondierend ausgebildeten zylindrischen Führungshülsen 21 des Führungsblocks 20 geführt. Dies hat den Vorteil, dass die Klemmbacken 4 präzise durch spanabhebendes Drehen hergestellt werden können, und auch die Führungshülsen 21 präzise gebohrt oder gefräst werden können. Grundsätzlich sind jedoch auch andere Querschnittsformen der Klemmbacken 4 möglich, insbesondere vieleckige Querschnittsformen.

Die Führungshülsen 21 erstrecken sich exakt horizontal, d.h. senkrecht zur Mittellinie 55 des Beschickungskanals, sodass die Klemmbacken 4 beim Verstellen exakt horizontal, radial einwärts und ohne Axialversatz geführt sind, um das Glasrohr ohne Längsverschiebung reibschlüssig zu halten. Aufgrund der Führung der Klemmbacken 4 exakt radial einwärts tritt beim Klemmen eines Glasrohrs kein störender Axialversatz auf.

Die Klemmbacken 4 sind über zugeordnete Hebel 3 gelenkig mit dem Betätigungselement 1 verbunden. Genauer gesagt ist an einem vorderen Ende eines ersten Schenkels 30 des Hebels 3 ein Gleitbolzen 33 vorgesehen, der gleitbeweglich in einer Führungsnut 14 gelagert ist, die in einem Führungsarm 13 am unteren Ende des Betätigungselements 1 ausgebildet ist. Weiterhin ist an einem vorderen Ende eines zweiten Schenkels 31 des Hebels 3 ein Gleitbolzen 34 vorgesehen, der gleitbeweglich in einer Führungsnut 41 geführt ist, die in dem jeweiligen Klemmbacken 4 ausgebildet ist.

Durch Drücken am Spannringflansch 12 Richtung Feder 54 mittels einer externen Kraft kann die Vorspannkraft der Feder 54 überwunden werden. Das Betätigungselement 1 gleitet dann auf dem Grundkörper 51 nach oben und nimmt gleichzeitig die drei Hebel 3 mit. Die Hebel 3 sind über die Gleitbolzen 34 mit dem Führungsblock 20 verbunden. Der Führungsblock 20 ist wiederum gleitbeweglich in dem Betätigungselement 1 geführt. Die Hebel 3 drehen sich um den Führungsblock 20. Drehlager und die Klemmbacken 4 werden dadurch verstellt, um die Öffnungsweite der Klemmbacken 4 zu verstellen.

Um die Längendifferenz zwischen linearen und rotatorischen Bewegungen auszugleichen, sind die Bauteile (Betätigungselement 1 und Klemmbacken 4) mit Führungsnuten versehen, die zweckmäßig als Langlöcher ausgebildet sind. Die Ausrichtung dieser Führungsnuten bzw. Langlöcher ist dadurch bestimmt, ob radiale oder axiale Bewegungsanteile gesperrt bzw. frei sein müssen.

Bevorzugt erstreckt sich die Führungsnut 14 in dem Führungsarm 13 exakt in horizontaler Richtung, senkrecht zur Mittellinie 55 des Beschickungskanals. Ferner erstreckt sich die Führungsnut 41 in dem jeweiligen Klemmbacken 4 bevorzugt exakt vertikal, parallel zur Mittellinie 55 des Beschickungskanals. Grundsätzlich sind jedoch auch andere Orientierungen der Führungsnuten 14, 41 möglich, weil in jedem Fall durch die Ausrichtung der Führungshülsen 21 eine exakt horizontale Verstellbewegung der Klemmbacken 4 gewährleistet ist. Die in den Figuren 4a und 4b gezeigten Orientierungen der Führungsnuten 14, 41 ermöglichen jedoch eine relativ kraftsparende Verstellung der Klemmbacken 4.

Die Drehachsen 32 der Hebel 3 sind in dem Führungsblock 20 gelagert, der aufgrund seiner feststehenden Anordnung am unteren Ende des Beschickungskanals und der dort vorherrschenden radialsymmetrischen Kräfte stets eine Lagerung der Drehachsen 32 unter einem konstanten Abstand zur Mittellinie 55 des Beschickungskanals ermöglicht. Die Drehachsen 32 können, wie in der Fig. 3 gezeigt, in Bohrungen in dem Führungsblock 20 gelagert sein.

Für eine noch präzisere Festlegung der Positionen der Hebel 3 und deren Schwenkbewegung um die Drehachsen 32 wird es jedoch bevorzugt, wenn die Führungsnuten 14 zum Führen der Gleitbolzen 30 durch spanabhebendes Drehen des Betätigungselements 1 ausgebildet sind. Denn durch spanabhebendes Drehen des Betätigungselements 1 kann gewährleistet werden, dass sämtliche Führungsnuten mit geringen Toleranzen hergestellt werden können und die Gleitbolzen 30 exakt radial einwärts bzw. auswärts führen. Die Gleitbolzen 30, 31 der Hebel 3 können als zylindrische Sicherungsbolzen ausgebildet sein, die mittels Sicherungsringen in den zugeordneten Führungsnuten 14, 41 gesichert geführt sind.

Wie man den Figuren 4a und 4b entnehmen kann, ist der Hebel 3 als abgewinkelter Hebel ausgebildet, wobei die beiden Schenkel 30, 31 des Hebels 3 einen Winkel miteinander einschließen, der zweckmäßig im Bereich zwischen 45° und 135° und bevorzugter im Bereich zwischen 60° und 120° liegt und noch bevorzugter 90° beträgt oder um nur wenige Grad von 90° abweicht.

Der Hebel 3 ermöglicht eine vorteilhafte Übersetzung der Verstellung des Betätigungselements 1 in der Betätigungsrichtung B nach dem Kniehebelprinzip in eine Verstellung der Klemmbacken 4 in der horizontalen Richtung, senkrecht zur Mittelinie des Beschickungskanals. Die Besonderheit des Kniehebelprinzips liegt darin, dass sich das Übersetzungsverhältnis von aufgewendeter Kraft zu resultierender Kraft bzw. von primärem Hub zu sekundärem Hub während der Bewegung kontinuierlich verschieben kann. Dies ermöglicht es erfindungsgemäß, dass die Klemmbacken 4 während ihrer Verstellung zunächst zügig und mit relativ großem Hub an das Glasrohr herangeführt werden können, dass die Klemmbacken 4 in einem mittleren Bereich mit mittlerer Geschwindigkeit und mittlerem Hub an das Glasrohr herangeführt werden können, und dass die Klemmbacken 4 für kleine Glasrohrdurchmesser schließlich mit geringer Geschwindigkeit und sehr geringem Hub an das Glasrohr herangeführt werden können.

Dies korrespondiert zu den vorherrschenden Klemmkräften in den vorgenannten Bereichen: für relativ große Glasrohraußendurchmesser ist die von den Klemmbacken 4 erzeugte Klemmkraft vergleichsweise groß, für mittelgroße Glasrohraußendurchmesser ist die von den Klemmbacken 4 erzeugte Klemmkraft mittelgroß und für kleine Glasrohraußendurchmesser ist die von den Klemmbacken 4 erzeugte Klemmkraft vergleichsweise klein. Die vorherrschenden Klemmkräfte können somit über einen weiten Durchmesserbereich optimal an die Stabilität von Glasrohren angepasst werden, da Glasrohre mit relativ großen Durchmessern sich durch eine höhere Stabilität auszeichnen, wohingegen sich Glasrohre mit relativ kleinen Durchmessern durch eine geringere Stabilität auszeichnen.

Wie man den Figuren 4a und 4b entnehmen kann, ist der Hebel 3 im Bereich von relativ großen Glasrohrdurchmessern (Fig. 4a) so ausgerichtet, dass sich der erste Schenkel 30 unter einem spitzen Winkel geneigt zum unteren Ende des Beschickungskanals erstreckt, während der Hebel 3 im Bereich von relativ kleinen Glasrohrdurchmessern (Fig. 4b) so ausgerichtet, dass sich der erste Schenkel 30 im Wesentlichen senkrecht zur Mittellinie 55 erstreckt. Gleichzeitig ist der Gleitbolzen 23 am vorderen Ende des ersten Schenkels 30 im Bereich von relativ großen Glasrohrdurchmessern (Fig. 4a) relativ weit innen in der Führungsnut 14 und der Gleitbolzen 34 am vorderen Ende des zweiten Schenkels 31 im oberen oder mittleren Bereich der Führungsnut 41 im Klemmbacken 4 angeordnet, während sich der Gleitbolzen 23 am vorderen Ende des ersten Schenkels 30 im Bereich von relativ kleinen Glasrohrdurchmessern (Fig. 4b) relativ weit außen in der Führungsnut 14 und der Gleitbolzen 34 am vorderen Ende des zweiten Schenkels 31 im unteren Bereich der Führungsnut 41 im Klemmbacken 4 befindet. Auf diese Weise kann mit dem Haltefutter ein sehr großer Bereich von Glasrohrdurchmessern abgedeckt werden. Idealerweise sind die Hebelverhältnisse so gewählt, dass alle üblichen Glasrohrdurchmesser zur Herstellung von Primär-Packmitteln für pharmazeutische Wirkstoffe, insbesondere von Glasfläschchen (Vials), Karpulen oder Spritzenkörpern, abgedeckt sind, insbesondere ein Bereich zwischen etwa 6 mm und 32 mm.

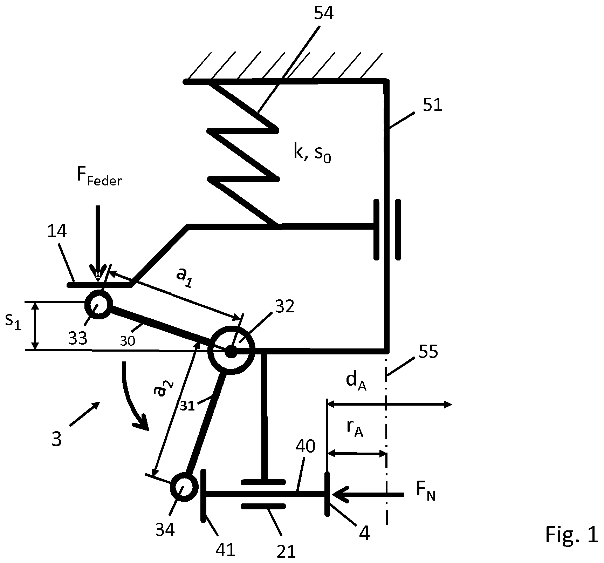

Fig. 1 fasst in einer schematischen Darstellung bevorzugte Hebelverhältnisse eines Haltefutters gemäß der vorliegenden Erfindung zusammen. Darin sind die folgenden Größen angegeben:

$k$: Federkonstante
$s_0$: Federvorspannung
$s_1$: Federweg
$a_1$: Schenkellänge des ersten Schenkels 30
$a_2$: Schenkellänge des zweiten Schenkels 31

Es gibt für die Abhängigkeit der Klemmkraft vom Federweg s:

$$F_N(s) = \frac{a_1}{a_2} \times \cos^2(\alpha) \times F_{Feder}$$

$$= \frac{a_1}{a_2} \times \cos^2\left(\sin^{-1}\left(\frac{s}{a_1}\right)\right) \times k \times s$$

Diese Abhängigkeit kann für den bevorzugten Fall gleicher Schenkellängen $a_1 = a_2$ vereinfacht werden:

$$F_N(s_1) = \cos^2\left(\sin^{-1}\left(\frac{s_1}{a_1}\right)\right) \times k \times (s_0 + s_1) \qquad f\ddot{u}r\ a_1 = a_2$$

Weiter gilt für den bevorzugten Fall gleicher Schenkellängen:

$$r_A(s_1) = 6.5 + s_1 \qquad f\ddot{u}r\ a_1 = a_2$$

$$d_A(s_1) = 13 + 2 \times s_1 \qquad f\ddot{u}r\ a_1 = a_2$$

Durch geeignete Wahl der Schenkellängen können so erfindungsgemäß die Kräfteverhältnisse für die unterschiedlichen Bereichen von Glasrohrdurchmessern geeignet eingestellt werden.

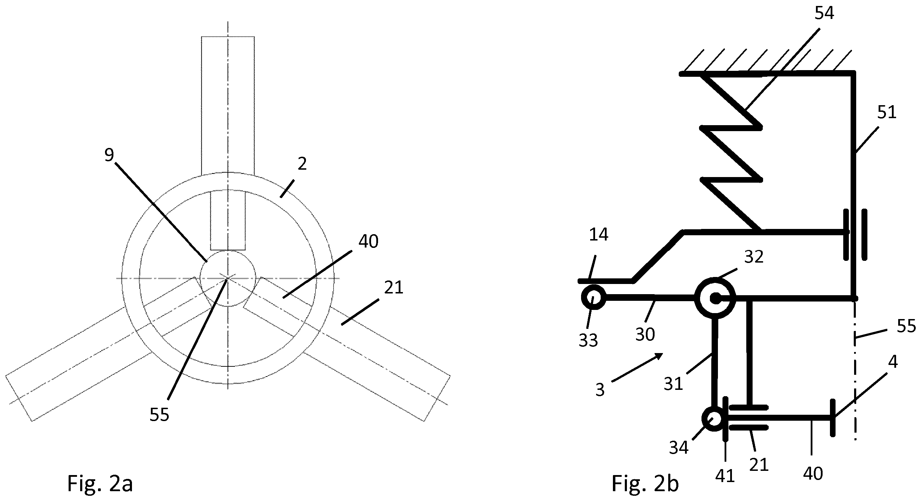

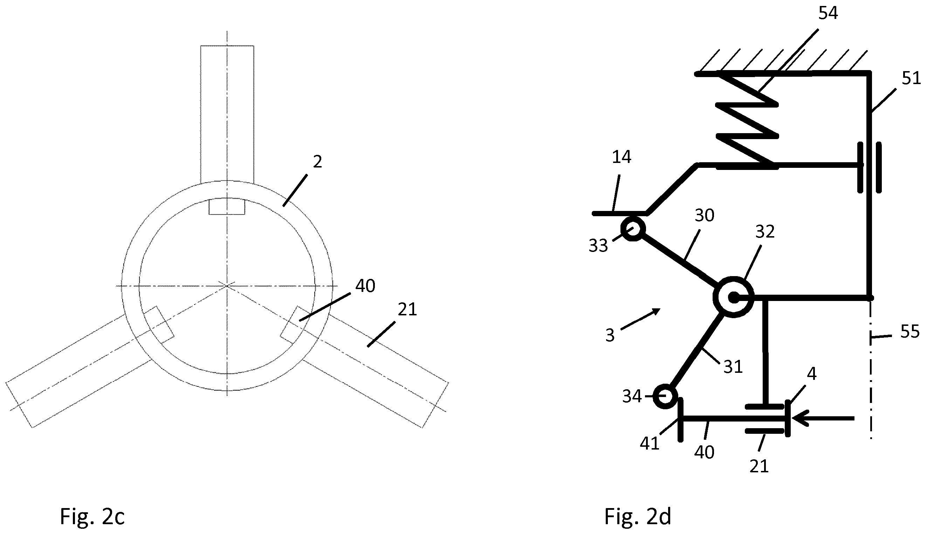

Die Figuren 2a bis 2d fassen für eine bevorzugte Auslegung des Kniehebels die Winkelverhältnisse und Geometrie beim Klemmen für relativ kleine und relativ große Öffnungsweiten der Klemmbacken zusammen.

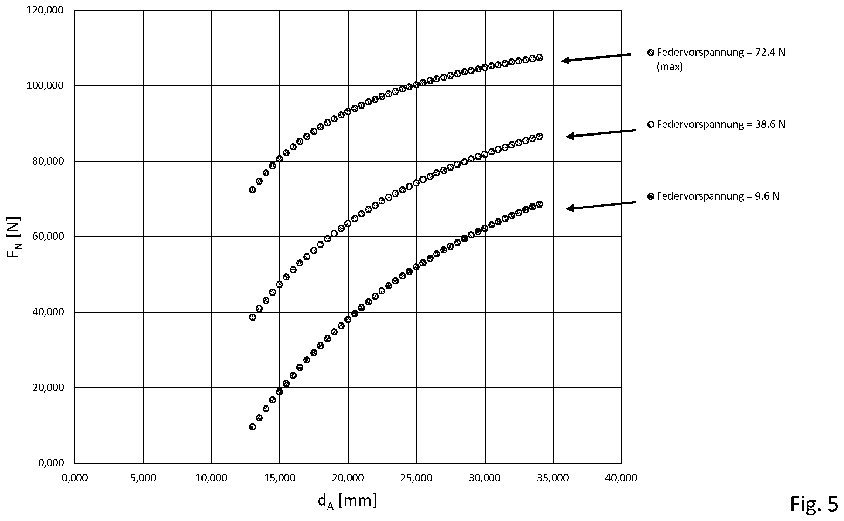

Die Fig. 5 zeigt typische Kennlinien eines Haltefutters gemäß der vorliegenden Erfindung für verschiedene Federvorspannungen. Erkennbar ist, dass die vorherrschenden Klemmkräfte für relativ kleine Glasrohrdurchmesser vergleichsweise klein sind und kontinuierlich zu höheren Glasrohrdurchmessern ansteigen, bevorzugt ohne dass in den Kennlinien Unstetigkeiten oder Umkehrpunkte auszumachen sind.

Wie dem Fachmann ohne weiteres ersichtlich sein wird, kann das Haltefutter gemäß der vorliegenden Erfindung in entsprechender Weise auch zur Herstellung von anderen Typen von Glasbehältnissen angewendet werden, die durch Heissumformung aus Glasrohren hergestellt werden, insbesondere allgemein zur Herstellung von Glas-Verpackungsmitteln, auch mit größeren Abmessungen als zur Aufbewahrung von pharmazeutischen Wirkstoffen üblich.

**Bezugszeichenliste**

| | |
|---|---|
| 1 | Betätigungselement |
| 2 | Führungsblock |
| 3 | Winkelhebel |
| 4 | Klemmbacke |
| 9 | Glasrohr |
| 10 | obere Hülse |
| 11 | untere Hülse |
| 12 | Flansch |
| 13 | Führungsarm |
| 14 | Führungsnut |
| 15 | Durchbrechung |
| 20 | Führungsblock |
| 21 | Führungshülse |
| 25 | Sicherungsnut |
| 30 | erster Hebelarm |
| 31 | zweiter Hebelarm |
| 32 | Drehachse |
| 33 | erster Gleitbolzen |
| 34 | zweiter Gleitbolzen |
| 40 | Klemmbackenzylinder |
| 41 | Führungsnut |
| 50 | Haltefutter |
| 51 | Grundkörper |
| 52 | Beschickungskanal |
| 53 | Federanschlag |
| 54 | Spannfeder |
| 55 | Mittellinie |
| 56 | Motorgehäuse |

57 Antriebsmotor

58 Befestigungsflansch

59 Lager

60 Lager

B Betätigungsrichtung

**Patentansprüche**

**1.** Haltefutter für Glasrohre für mit Glasrohren beschickbare Maschinen zur Herstellung von Glasbehältnissen, mit

einem zentralen Beschickungskanal (52) für die Glasrohre,
mehreren verstellbaren Klemmbacken (4), die am unteren Ende des Beschickungskanals und verteilt um dessen Öffnung herum angeordnet sind, wobei deren Abstand zur Mittellinie des Beschickungskanals verstellbar ist,
einem Betätigungselement (1) zum gemeinsamen Verstellen der Klemmbacken, einem Koppelelement, das die verstellbaren Klemmbacken (4) mit dem Betätigungselement (1) koppelt, und
Führungen (21), um eine Verstellbewegung der Klemmbacken senkrecht, radial einwärts zur Mittellinie des Beschickungskanals (52) zu führen,
**dadurch gekennzeichnet, dass**
das Koppelelement Hebel (3) umfasst, die jeweils gelenkig mit dem Betätigungselement (1) und einer zugeordneten Klemmbacke (4) verbunden sind,
wobei das Betätigungselement (1) mittels einer Feder (54) elastisch gegen einen Grundkörper (51) des Haltefutters (50) vorgespannt ist, wobei das Koppelelement so ausgelegt ist, dass ein Verhältnis zwischen einer radial wirkenden Klemmkraft der Klemmbacken (4) und einer elastischen Rückstellkraft der Feder (54) mit abnehmender Öffnungsweite der Klemmbacken kontinuierlich verkleinert wird.

**2.** Haltefutter nach Anspruch 1, wobei die Feder (54) konzentrisch um den Grundkörper des Haltefutters (50) herum angeordnet ist und gegen flanschartige Abschnitte (12, 53) des Betätigungselements (1) und des Grundkörpers (51) des Haltefutters (50) abgestützt ist.

**3.** Haltefutter nach einem der vorhergehenden Ansprüche, wobei die Hebel als abgewinkelte Hebel (3) mit einem ersten Schenkel (30) und einem zweiten Schenkel (31) ausgebildet sind, wobei der erste Schenkel (30) jeweils gelenkig mit dem Betätigungselement (1) und der zweite Schenkel (31) jeweils gelenkig mit einer zugeordneten Klemmbacke (4) verbunden ist.

**4.** Haltefutter nach Anspruch 3, wobei sich die ersten Schenkel (30) senkrecht zur Mittellinie erstrecken, wenn die Klemmbacken (4) nahezu bis zur Mittellinie radial einwärts verstellt sind, und wobei sich die ersten Schenkel (30) unter einem spitzen Winkel geneigt zum unteren Ende des Beschickungskanals erstrecken, wenn die Klemmbacken (4) maximal geöffnet sind.

**5.** Haltefutter nach Anspruch 3 oder 4, wobei am vorderen Ende der ersten Schenkel (30) jeweils ein Bolzen (33) vorgesehen ist, der in einer Nut (14) am Betätigungselement (1) gleitbeweglich geführt ist, und wobei am vorderen Ende der zweiten Schenkel (31) jeweils ein Bolzen (34) vorgesehen ist, der in einer Nut (41) der zugeordneten Klemmbacke (4) gleitbeweglich geführt ist.

**6.** Haltefutter nach Anspruch 5, wobei sich die Nuten (14) am Betätigungselement (1) senkrecht zur Mittellinie des Betätigungselements erstrecken und wobei sich die Nuten (41) der zugeordneten Klemmbacke (4) parallel zur Mittellinie des Betätigungselements erstrecken.

**7.** Haltefutter nach Anspruch 5 oder 6, wobei die Nuten (14) am Betätigungselement (1) in Führungsarmen (13) ausgebildet sind, die von dem Betätigungselement radial auswärts abragen.

**8.** Haltefutter nach Anspruch 6 oder 7, wobei ein Abschnitt (13) des Betätigungselements (1), an dem die Nuten (14) ausgebildet sind, als rotationssymmetrischer Körper ausgebildet ist, an dem durch spanende Bearbeitung durch Drehen die Nuten (14) ausgebildet sind, in denen die Bolzen (33) an den vorderen Enden der ersten Schenkel (30) gleitbeweglich geführt sind.

9. Haltefutter nach einem der vorhergehenden Ansprüche, wobei Drehachsen (32) der Hebel (3) an einem Führungsblock (20) gelagert sind, der feststehend am unteren Ende des Beschickungskanals (52) vorgesehen ist.

10. Haltefutter nach Anspruch 9, wobei die Führungen (21) am unteren Ende des Führungsblocks (20) ausgebildet sind.

11. Haltefutter nach einem der vorhergehenden Ansprüche, wobei die Führungen als zylindrische oder vieleckige Führungshülsen (21) ausgebildet sind und wobei die Klemmbacken (4) zylindrisch oder vieleckig und korrespondierend zu den zylindrischen oder vieleckigen Führungshülsen ausgebildet sind, die in den zylindrischen oder vieleckigen Führungshülsen gleitbeweglich geführt sind.

12. Haltefutter nach einem der vorhergehenden Ansprüche, weiterhin umfassend einen Antriebsmotor (57), der unmittelbar an einer den Beschickungskanal (52) einschließenden Welle angeordnet ist, um die Welle mit dem daran vorgesehenen Haltefutter zu drehen.

**Claims**

1. A retention chuck for glass pipes for machines which can be supplied with glass pipes for producing glass containers, having

    a central supply channel (52) for the glass pipes,
    a plurality of adjustable clamping jaws (4) which are arranged at the lower end of the supply channel and distributed around the opening thereof, wherein the spacing thereof from the center line of the supply channel is adjustable,
    an actuation element (1) for joint adjustment of the clamping jaws,
    a coupling element which couples the adjustable clamping jaws (4) to the actuation element (1), and
    guides (21) in order to guide an adjustment movement of the clamping jaws perpendicularly, radially inwardly relative to the center line of the supply channel (52),
    **characterized in that**
    the coupling element comprises levers (3) which are each connected in an articulated manner to the actuation element (1) and an associated clamping jaw (4),

    wherein the actuation element (1) is resiliently pretensioned by means of a spring (54) against a base member (51) of the retention chuck (50), wherein the coupling element is configured in such a manner that a ratio between a radially active clamping force of the clamping jaws (4) and a resilient restoring force of the spring (54) is continuously decreased as the opening width of the clamping jaws decreases.

2. The retention chuck as claimed in claim 1, wherein the spring (54) is arranged concentrically around the base member of the retention chuck (50) and is supported against flange-like portions (12, 53) of the actuation element (1) and of the base member (51) of the retention chuck (50).

3. The retention chuck as claimed in one of the preceding claims, wherein the levers are constructed as angled levers (3) having a first leg (30) and a second leg (31), wherein the first leg (30) is connected to the actuation element (1) in an articulated manner and the second leg (31) is connected to an associated clamping jaw (4) in an articulated manner.

4. The retention chuck as claimed in claim 3, wherein the first legs (30) extend perpendicularly to the center line when the clamping jaws (4) are adjusted radially inward almost as far as the center line, and wherein the first legs (30) extend in an inclined manner at an acute angle with respect to the lower end of the supply channel when the clamping jaws (4) are opened to the maximum extent.

5. The clamping chuck as claimed in claim 3 or 4, wherein at the front end of the first legs (30) there is provided in each case a pin (33) which is slidingly movably guided in a groove (14) at the actuation element (1) and wherein at the front end of the second legs (31) there is provided in each case a pin (34) which is slidingly movably guided in a groove (41) of the associated clamping jaw (4).

6. The retention chuck as claimed in claim 5, wherein the grooves (14) at the actuation element (1) extend perpendicularly to the center line of the actuation element and wherein the grooves (41) of the associated clamping jaw (4) extend parallel to the center line of the actuation element.

7. The retention chuck as claimed in claim 5 or claim 6, wherein the grooves (14) are formed at the actuation element (1) in guiding arms (13) which protrude radially outward from the actuation element.

8. The retention groove as claimed in claim 6 or claim 7, wherein a portion (13) of the actuation element (1) in which the grooves (14) are formed is constructed as a rotationally symmetrical member in which by turning by a machining processing operation the grooves (14) are formed, in which the pins (33) are slidingly movably guided at the front ends of the first legs (30).

9. The retention chuck as claimed in one of the preceding claims, wherein rotation axles (32) of the levers (3) are supported on a guiding block (20) which is provided so as to be fixed to the lower end of the supply channel (52).

10. The retention chuck as claimed in claim 9, wherein the guides (21) are formed at the lower end of the guiding block (20).

11. The retention chuck as claimed in one of the preceding claims, wherein the guides are constructed as cylindrical or polygonal guiding sleeves (21) and wherein the clamping jaws (4) are constructed in a cylindrical or polygonal manner and so as to correspond to the cylindrical or polygonal guiding sleeves which are slidingly movably guided in the cylindrical or polygonal guiding sleeves.

12. The retention chuck as claimed in one of the preceding claims, further comprising a drive motor (57), which is arranged directly on a shaft which encloses the supply channel (52) in order to rotate the shaft with the retention chuck provided thereon.

**Revendications**

1. Mandrin de maintien pour tubes en verre pour machines pouvant être alimentées avec des tubes en verre pour la fabrication de récipients en verre, comprenant un canal d'alimentation central (52) pour les tubes en verre,

plusieurs mâchoires de serrage (4) réglables, qui sont disposées à l'extrémité inférieure du canal d'alimentation et réparties autour de son ouverture, la distance de celles-ci
par rapport à la ligne médiane du canal d'alimentation étant réglable,
un élément d'actionnement (1) pour le réglage commun des mâchoires de serrage,
un élément de couplage qui couple les mâchoires de serrage (4) réglables à l'élément d'actionnement (1), et
des guidages (21), pour guider un mouvement de réglage des mâchoires de serrage perpendiculairement, radialement vers l'intérieur en direction de la ligne médiane du canal d'alimentation (52),
**caractérisé en ce que**
l'élément de couplage comprend des leviers (3), qui sont chacun reliés de manière articulée à l'élément d'actionnement (1) et à une mâchoire de serrage (4) associée,
l'élément d'actionnement (1) étant élastiquement précontraint contre un corps de base (51) du mandrin de maintien (50) au moyen d'un ressort (54), l'élément de couplage étant conçu de telle sorte qu'un rapport entre une force de serrage agissant radialement des mâchoires de serrage (4) et une force de rappel élastique du ressort (54) diminue continuellement à mesure que l'ouverture des mâchoires de serrage diminue.

2. Mandrin de maintien selon la revendication 1, le ressort (54) étant disposé concentriquement autour du corps de base du mandrin de maintien (50) et étant supporté contre des sections en forme de bride (12, 53) de l' élément d'actionnement (1) et du corps de base (51) du mandrin de maintien (50).

3. Mandrin de maintien selon l'une des revendications précédentes, les leviers étant formés comme des leviers coudés (3) avec un premier bras (30) et un second bras (31), le premier bras (30) étant relié de manière articulée à l'élément d'actionnement (1) et le second bras (31) étant relié de manière articulée à une mâchoire de serrage (4) associée.

4. Mandrin de maintien selon la revendication 3, les premiers bras (30) s'étendant perpendiculairement à la ligne médiane lorsque les mâchoires de serrage (4) sont réglées radialement vers l'intérieur presque jusqu'à la ligne médiane, et les premiers bras (30) s'étendant de manière inclinée selon un angle aigu vers l'extrémité inférieure du canal d'alimentation lorsque les mâchoires de serrage (4) sont ouvertes au maximum.

**5.** Mandrin de maintien selon la revendication 3 ou 4, une axe (33) étant prévue à l'extrémité avant de chaque premier bras (30), qui est guidée en mouvement de glissement dans une rainure (14) de l'élément d'actionnement (1), et une axe (34) étant prévue à l'extrémité avant de chaque second bras (31), qui est guidée en mouvement de glissement dans une rainure (41) de la mâchoire de serrage (4) associée.

**6.** Mandrin de maintien selon la revendication 5, les rainures (14) de l'élément d'actionnement (1) s'étendant perpendiculairement à la ligne médiane de l'élément d'actionnement, et les rainures (41) de la mâchoire de serrage (4) associée s'étendant parallèlement à la ligne médiane de l'élément d'actionnement.

**7.** Mandrin de maintien selon la revendication 5 ou 6, les rainures (14) de l'élément d'actionnement (1) étant formées dans des bras de guidage (13) qui dépassent radialement vers l'extérieur à partir de l'élément d'actionnement.

**8.** Mandrin de maintien selon la revendication 6 ou 7, une section (13) de l'élément d'actionnement (1), dans laquelle les rainures (14) sont formées, étant formée comme un corps à symétrie de rotation, dans lequel les rainures (14) sont formées par usinage par enlèvement de copeaux par tournage, dans lesquelles les axes (33) aux extrémités avant des premiers bras (30) sont guidées en mouvement de glissement.

**9.** Mandrin de maintien selon l'une des revendications précédentes, des axes de rotation (32) des leviers (3) étant montées sur un bloc de guidage (20) qui est prévu de manière fixe à l'extrémité inférieure du canal d'alimentation (52).

**10.** Mandrin de maintien selon la revendication 9, les guidages (21) étant formés à l'extrémité inférieure du bloc de guidage (20).

**11.** Mandrin de maintien selon l'une des revendications précédentes, les guidages étant formés comme des douilles de guidage (21) cylindriques ou polygonales, et les mâchoires de serrage (4) étant formées de manière cylindrique ou polygonale et correspondant aux douilles de guidage cylindriques ou polygonales, qui sont guidées en mouvement de glissement dans les douilles de guidage cylindriques ou polygonales.

**12.** Mandrin de maintien selon l'une des revendications précédentes, comprenant en outre un moteur d'entraînement (57), qui est disposé directement sur un arbre entourant le canal d'alimentation (52), pour tourner l'arbre avec le mandrin de maintien qui y est prévu.

Fig. 1

Fig. 2b

Fig. 2a

EP 3 752 469 B1

Fig. 2c

Fig. 2d

Fig. 3

Fig. 4a

Fig. 4b

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0469297 A2
- DE 102008058211 A1
- CN 103073177 A
- JP 2001019451 A
- FR 689782 A